# EUROPEAN PATENT SPECIFICATION

(11) **EP 3 482 527 B1**
(45) Date of publication and mention of the grant of the patent: **24.02.2021**
(21) Application number: 17823358.1
(22) Date of filing: 21.06.2017
(51) Int. Cl.: H04L 9/32, H04L 12/18, H04L 9/06, H04L 29/06

(54) **APPARATUS, COMPUTER PROGRAM, AND METHOD FOR SECURELY BROADCASTING MESSAGES**
VORRICHTUNG, COMPUTERPROGRAMM UND VERFAHREN ZUR SICHEREN ÜBERTRAGUNG VON NACHRICHTEN
APPAREIL, PROGRAMME INFORMATIQUE, ET PROCÉDÉ DESTINÉS À DIFFUSER DE MANIÈRE SÉCURISÉE DES MESSAGES

(30) Priority: 05.07.2016 US 201615202447
(43) Date of publication of application: 15.05.2019
(73) Proprietor: DIGITAL 14 LLC, Abu Dhabi (AE)
(72) Inventor: SHERKIN, Alexander, Mississauga, Ontario L4Z 1H8 (CA); SINGH, Ravi, Mississauga, Ontario L4Z 1H8 (CA); MATOVSKY, Michael, Mississauga, Ontario L4Z 1H8 (CA)
(74) Representative: Perry, Clifford
(86) International application number: PCT/CA2017/000158
(87) International publication number: WO 2018/006154

(56) References cited:
- US-A1- 2002 169 971
- US-A1- 2003 110 397
- US-A1- 2008 013 733
- US-A1- 2011 158 411
- US-A1- 2015 074 403

## Description

### Field of the Invention

The present invention relates to security protocols, and more particularly to security protocols for broadcasting messages.

### Background

In certain scenarios, a sender who has already established individual sessions with multiple recipients may want to send the same message to such multiple recipients. Further, it may be valuable to have confidence that the same message is actually sent to all of such recipients. It is understood that the broadcast message may not be delivered to some of the recipients. Additionally, it is expected that modified messages will be rejected. Thus, if a recipient receives a broadcast message, this should be the same message that the other recipients receive.

Published US patent application 2008/0013733 A1 discloses a method that involves establishing a top-level key and optionally also a verification tag. The top-level key is used as the MDP key for encrypting a broadcast medium. Only the part of the key message that contains the encrypted top-level key is authenticated, e.g. using a signature or a Message Access Code (MAC). Any known group-key distribution protocol can be used that is based on the creation of a hierarchy of keys. Examples of such methods are the LKH and SD methods. The group-key distribution protocol output key H, traditionally used as the MDP key, or a derivative thereof is used to encrypt the top-level MDP-key. The invention, further, includes optimization of a group-key message by eliminating unnecessary message components relative a specified group or sub-group of users. The optimization can be made in dependence of contextual data such as user profile, network status, or operator policies.

Published US patent application 2015/0074493 A1 discloses a method for mutual authentication between a station, having a digital rights agent, and a secure removable media device. The digital rights agent is configured to initiate mutual authentication by sending a message to the secure removable media device. The secure removable media device is configured to encrypt at least a first random number using a public key associated with the digital rights agent. The digital rights agent is configured to decrypt the encrypted first random number, and encrypt at least a second random number and a first hash based on at least the first random number. The secure removable media device is configured to decrypt the encrypted second random number and the first hash, verifie the first hash to authenticate the digital rights agent, and generate a second hash based on at least the second random number. The digital rights agent is configured to verify the second hash to authenticate the secure removable media device.

Published US patent application 2011/0158411 A1 discloses a method of registering a plurality of client devices with a device registration server for secure data communications, whereby a unique symmetric key is generated for each of the client devices using a cryptographic function on a private key of the device registration server and a respective public key of each of the client devices, and a broadcast message containing the public key of the device registration server is sent to the client devices, in which the client devices are configured to generate a respective unique symmetric key from the public key of the device registration server and its own private key using a cryptographic function, and in which the unique symmetric key generated by each client device matches the respective unique symmetric key generated by the device registration server for the respective client device.

In view of the present state of the art, there is thus a need for addressing these and/or other needs of the prior art.

### SUMMARY

An apparatus, computer program, and method according to the independent claims are provided for securely broadcasting a message to a plurality of recipient devices. In operation, a message is identified, and the message is encrypted utilizing a first key. A message authentication code (MAC) is generated utilizing a second key that is mathematically coupled to the first key (that is utilized to encrypt the message). The encrypted message is caused to be broadcasted to a plurality of recipient devices, utilizing the MAC.

The first key includes an encryption key.

The second key includes a MAC key.

The first key and the second key are generated utilizing a third key, the third key comprising a broadcsat key. The first key and the second key are generated utilizing the third key via a key derivation function. Further, the third key may be included with the encrypted message to be broadcasted to the plurality of recipient devices. Still yet, the third key may be encrypted. Optionally, the third key may be encrypted differently for each of the plurality of recipient devices (e.g. utilizing different session keys). Even still, a plurality of headers may be generated for each of the plurality of recipient devices each with the differently encrypted third key.

In a fourth embodiment (which may or may not be combined with the first, second, and/or third embodiments), the message may be encrypted utilizing a symmetric encryption algorithm.

In a fifth embodiment (which may or may not be combined with the first, second, third, and/or fourth embodiments), the encrypted message may be caused to be broadcasted to the plurality of recipient devices, by sending the encrypted message to a routing server. As an option, the routing server may be configured for creating separate messages for each of the plurality of recipient devices. Further, each of the separate messages for each of the plurality of recipient devices may include a header specific to the recipient device, the encrypted MAC, and the encrypted message.

In a sixth embodiment (which may or may not be combined with the first, second, third, fourth, and/or fifth embodiments), the message is received by a recipient device, after which an encryption key and a MAC key is generated. Further generated is a MAC, utilizing the MAC key. The MAC is also validated, such that the message may be decrypted utilizing the encryption key, based on the validation.

### BRIEF DESCRIPTION OF THE DRAWINGS

Figure **1** illustrates a method for securely broadcasting a message to a plurality of recipient devices, in accordance with one embodiment.
Figure **2** illustrates a system for securely broadcasting a message to a plurality of recipient devices, in accordance with one embodiment.
Figure **3** illustrates a method for generating messages for being broadcast by a sending device, in accordance with one embodiment.
Figure **4** illustrates a method for processing and broadcasting messages utilizing a router server, in accordance with one embodiment.
Figure **5** illustrates a method for processing of each recipient-specific message by a recipient device, in accordance with one embodiment.
Figure **6** illustrates a network architecture, in accordance with one embodiment.
Figure **7** illustrates an exemplary system, in accordance with one embodiment.

### DETAILED DESCRIPTION

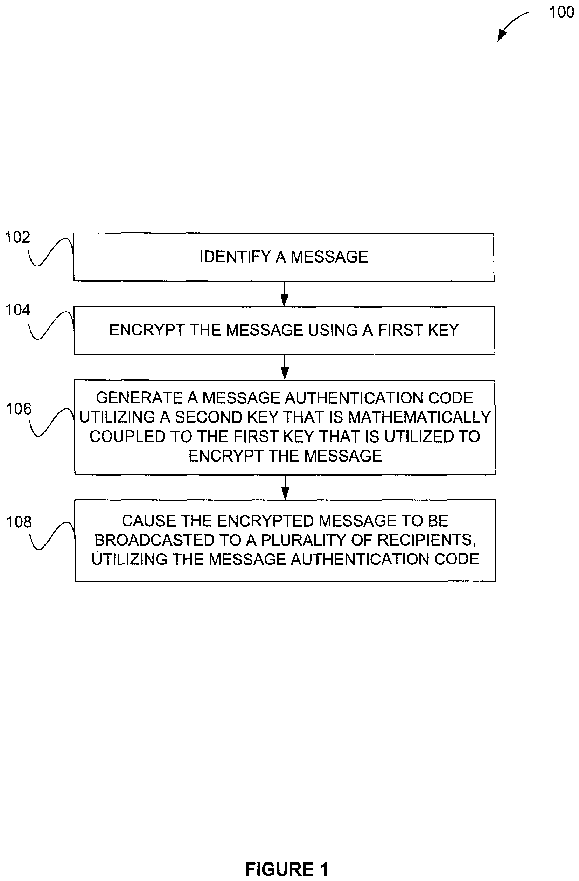

Figure **1** illustrates a method **100** for securely broadcasting a message to a plurality of recipient devices, in accordance with one embodiment. As shown, in operation **102,** a message is identified. In the context of the present description, the message may include any data that is communicated.

Further, in operation **104,** the message is encrypted utilizing a first key (e.g. a broadcast key). In various embodiments, the encryption may be carried out utilizing any desired encryption algorithm. For example, such encryption algorithm may include a symmetric encryption algorithm including, but not limited to, the Advanced Encryption Standard (AES), or any other encryption algorithm for that matter.

Moving to operation **106,** a message authentication code (MAC) is generated utilizing a second key (e.g. MAC key) that is mathematically coupled to the first key (that is utilized to encrypt the message). In one embodiment, the first key may include an encryption key. Additionally, in the context of the present description, such message authentication code (MAC) may include any code that is capable of validating (e.g. authenticating, etc.) a message upon receipt. For example, in one possible non-limiting embodiment, the MAC may include a hashed message authentication code (HMAC), or any other MAC, for that matter.

Also in the context of the present description, such mathematically coupling may include any relationship whereby it is statistically improbable (to the extent required for reasonable security) that the same MAC code would be generated for a different encryption key. For example, in one embodiment, the MAC key and the encryption key may be generated utilizing another key (e.g. broadcast key) via a key derivation function (KDF). Specifically, in one embodiment, the broadcast key may be generated using any algorithm (e.g. randomly), and the broadcast key may be input into the KDF, in order to generate the MAC key and the encryption key. Such KDF may, in various embodiments, include a key expansion algorithm including, but not limited to, a hashed message authentication code (HMAC)-based KDF (HKDF) algorithm, a cryptographically secure random (or pseudo-random) number generator (CSPRNG) algorithm, etc.

The encrypted message is then caused to be broadcasted to a plurality of recipient devices, utilizing the MAC. See operation **108.** In one embodiment, such MAC may be utilized by being included in or in connection with the encrypted message, for validation purposes that will be elaborated upon later during the description of subsequent embodiments.

Further, in one embodiment, the encrypted message may be caused to be broadcasted to the plurality of recipient devices, by sending the encrypted message to a routing server. In the context of the present description, the routing server may include any device that is configured for routing broadcast messages. For example, in one embodiment, the routing server may be configured for creating and sending separate messages for each of the plurality of recipient devices.

In yet another embodiment, the broadcast key may be included with the encrypted message to be broadcasted to the plurality of recipient devices. Still yet, the broadcast key may be encrypted. For example, the broadcast key may be encrypted differently for each of the plurality of recipient devices (e.g. utilizing different session keys). To this end, a plurality of headers may be generated for each of the plurality of recipient devices each with the differently encrypted broadcast key. In the context of a more specific embodiment, each of the separate messages for each of the plurality of recipient devices may thus include a header specific to the recipient device (with the encrypted broadcast key), the encrypted MAC, and the encrypted message.

By this design, upon message recipient in one possible embodiment, the message may be received by a recipient device, after which the encryption key and the MAC key may be re-generated, along with the MAC, utilizing the MAC key. The MAC may also be validated, such that the message may be decrypted utilizing the encryption key, based on the validation.

More illustrative information will now be set forth regarding various optional architectures and uses in which the foregoing method may or may not be implemented, per the desires of the user. It should be noted that the following information is set forth for illustrative purposes and should not be construed as limiting in any manner. Any of the following features may be optionally incorporated with or without the exclusion of other features described.

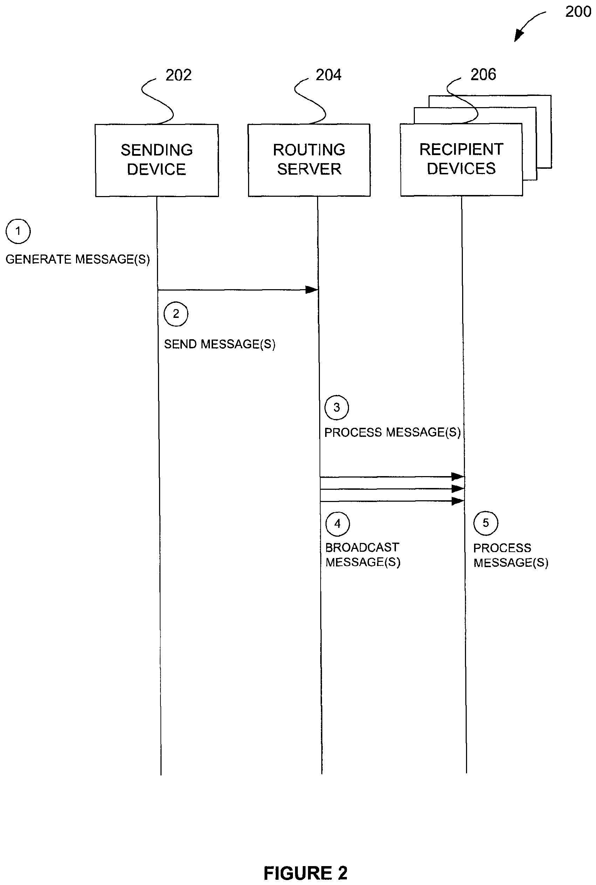

Figure **2** illustrates a system **200** for securely broadcasting a message to a plurality of recipient devices, in accordance with one embodiment. As an option, the system **200** may be implemented in the context of any one or more of the embodiments set forth in any previous and/or subsequent figure(s) and/or description thereof. However, it is to be appreciated that the system **200** may be implemented in the context of any desired environment.

As shown, a sending device **202,** a routing server **204,** and a plurality of recipient devices **206** are capable of communication over one or more networks (not shown). Strictly as an option, in one of many possible embodiments, the sending device **202** and the recipient devices **206** may be peer devices that engage in a peer-to-peer protocol such as the one disclosed in U.S. Application No.: 15/179,903, filed 6/10/2016, entitled "PEER-TO-PEER SECURITY PROTOCOL APPARATUS, COMPUTER PROGRAM, AND METHOD," and which is incorporated herein by reference in its entirety for all purposes (hereinafter "Incorporated Application").

In use, the routing server **204** serves to propagate messages received from the sending device **202** to the recipient devices **206.** To support the operation of the routing server **204,** a routing database (not shown) may be provided that is capable of communication with the routing server **204.** Specifically, such routing database may serve to store data (e.g. message queues, authenticated chat group information, encrypted file transfers, presence information) associated with the recipient devices **206.**

With continuing reference to Figure **2****,** the sending device **202,** at operation **1,** generates one or more messages by following a particular security protocol that will be elaborated hereinafter in greater detail. Next, in operation **2,** the message(s) are sent to the routing server **204,** which, in turn, processes the message(s) in operation **3.** After such processing, the routing server **204** broadcasts individual instances of the message(s) to the recipient devices **206** in operation **4.** Upon receipt, the recipient devices **206** individually process the corresponding message(s) in operation **5.** More information will now be set forth starting with the operation of the sending device **202** in connection with operations **1-2.**

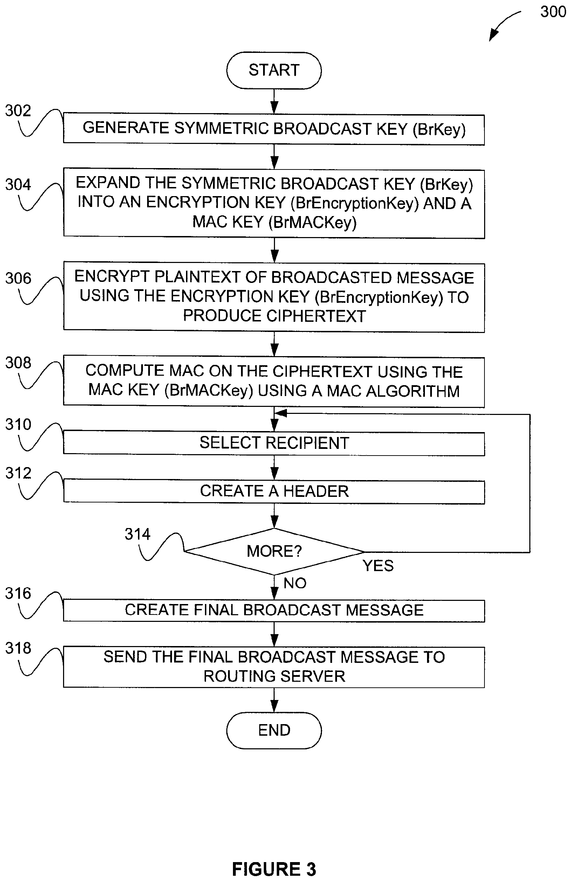

Figure **3** illustrates a method **300** for generating messages for being broadcasted by a sending device, in accordance with one embodiment. As an option, the method **300** may be implemented in the context of any one or more of the embodiments set forth in any previous and/or subsequent figure(s) and/or description thereof. For example, the method **300** may be implemented in the context of the sending device **202** of Figure **2** and, in particular, in connection with operations **1-2** of Figure **2****.** However, it is to be appreciated that the method **300** may be implemented in the context of any desired environment.

As will become apparent, the method **300** initiates a secure message broadcasting protocol that utilizes existing, established per-recipient device symmetric session keys. Specifically, in one embodiment, it may apply to a situation where a sending device (e.g. the sending device **202** of Figure **2**), hereinafter "sender," desires to broadcast a secure message to a list of recipient devices (e.g. the recipient devices **206** of Figure **2**), hereinafter "recipient." For every recipient, the sender has at least one symmetric session key that is associated with a recipient identifier (e.g. SessionKey[RecipientID]).

To accomplish this, in operation **302,** the sender generates a symmetric broadcast key (e.g. BrKey) and stores the same in connection with the aforementioned recipient identifier (e.g. SessionKey[RecipientID]). In one embodiment, the symmetric broadcast key may be generated with a random algorithm or any other algorithm, for that matter. For example, in other embodiments, a pseudorandom algorithm may be employed.

Next, in operation **304,** an expansion function (e.g. HKDF, CSPRNG) is used to expand the broadcast key (e.g. BrKey) into two additional keys, namely an encryption key (e.g. BrEncryptionKey) and a MAC key (e.g. BrMACKey). As mentioned earlier, this may be accomplished using any desired KDF. In one embodiment, the KDF may derive two additional keys using a pseudo-random function and may even be used to stretch such additional keys into longer keys or convert the same to a required format.

With continuing reference to Figure **3****,** the sender then encrypts a plaintext (and/or any other content) of the message using the encryption key (e.g. BrEncryptionKey) using a symmetric encryption algorithm (e.g. AES, etc.) to produce ciphertext [e.g. ciphertext = EBrEncryptionKey(Plaintext)]. See operation **306.** As will become apparent, such encryption key (or a derivation/transformation thereof) may be used to not only encrypt the plaintext, but also to decrypt the same.

In operation **308,** the sender computes a MAC on the ciphertext using the MAC key (e.g. BrMACKey) via a MAC algorithm (e.g. HMAC), such that MAC = MACBrMACKey(EBrEncryptionKey(Plaintext)). In one embodiment, the HMAC may involve a cryptographic hash function (hence the 'H' in HMAC) in combination with a secret cryptographic key. In such an embodiment, the HMAC may be used to simultaneously verify both data integrity and an authentication of a message. Any cryptographic hash function, (e.g. MD5, SHA-1, etc.) may be used in the calculation of the HMAC. In various embodiments, a cryptographic strength of the HMAC may depend upon a cryptographic strength of the underlying hash function, a size of its hash output, and/or a size and/or quality of the key.

The method **300** continues by performing various operations for each of a plurality of recipients that are to receive the message(s). Specifically, a recipient is selected in operation **310** and a specific header is generated for such recipient in operation **312.** In one embodiment, such specific header may include the broadcast key, in an encrypted format. As an option, the broadcast key may be encrypted with the aforementioned session key that is unique to the current particular recipient, as follows: H[RecipientID] = ESessionKey[RecipientID](BrKey). Such iterative process continues until there are no further recipients in need of a header per decision **314.**

Next, in operation **316,** the sender creates a final single message for being sent to a routing server (e.g. routing server **204** of Figure **2**) using an address that is stored for such routing server. See operations **316/318.** In one embodiment, the aforementioned final message may include a list of the headers generated in the repeated operation **312,** the message ciphertext created in operation **306,** and the MAC created in operation **308,** as follows: BroadcastMessage = {H[RecipientID]}, Ciphertext, MAC. More information will now be set forth regarding the processing of such final single message by the routing server, in accordance with one possible embodiment.

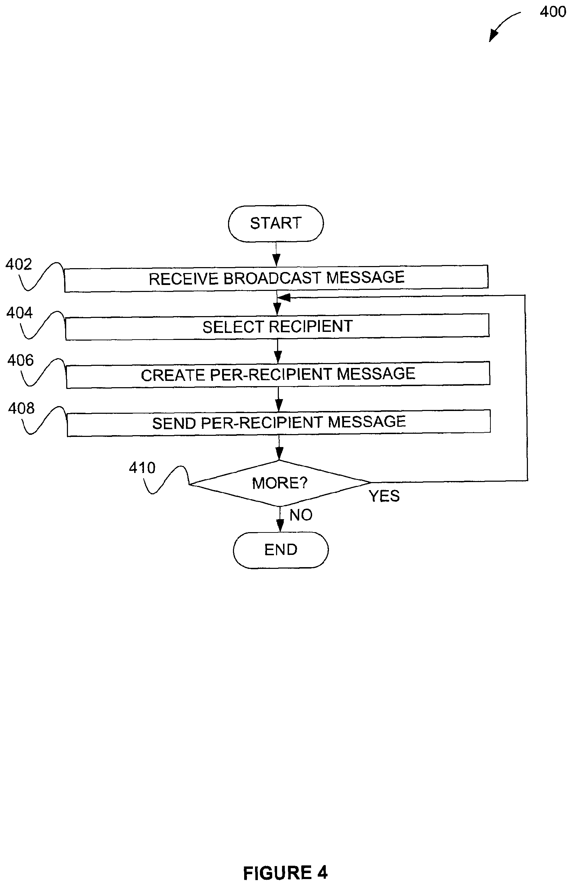

Figure **4** illustrates a method **400** for processing and broadcasting messages utilizing a router server, in accordance with one embodiment. As an option, the method **400** may be implemented in the context of any one or more of the embodiments set forth in any previous and/or subsequent figure(s) and/or description thereof. For example, the method **400** may be implemented in the context of the routing server **204** of Figure **2** and, in particular, in connection with operations **3-4** of Figure **2****.** However, it is to be appreciated that the method **400** may be implemented in the context of any desired environment.

As shown, the method **400** begins with a receipt of a broadcast message (e.g. the final message generated/send in operations **316/318** of Figure **3**) at a routing sever (e.g. the routing server **204** of Figure **2**). As mentioned earlier, the received broadcast message includes a list of the headers generated for each recipient, the message ciphertext, and the MAC. To this end, the method **400** continues by performing various operations for each of a plurality of recipients that are to receive the message(s).

Specifically, the recipients are each individually selected in operation **404** by processing, one-by-one, each of the headers included in the broadcast message received in operation **402.** Further, an individual message for each recipient (e.g. PerRecipientMessage) is created in operation **406.** In one embodiment, this may be accomplished by replicating the ciphertext, attaching/encapsulating the recipient-specific header to the ciphertext, and including the MAC, as follows: PerRecipientMessage = H[RecipientID], Ciphertext, MAC.

Once created, the recipient-specific message is sent in operation **408** and operations **404-408** are repeated until all recipient-specific messages are created and sent for each of the headers included in the broadcast message received in operation **402,** per decision **410.** More information will now be set forth regarding the processing of such recipient-specific messages by each recipient, in accordance with one possible embodiment.

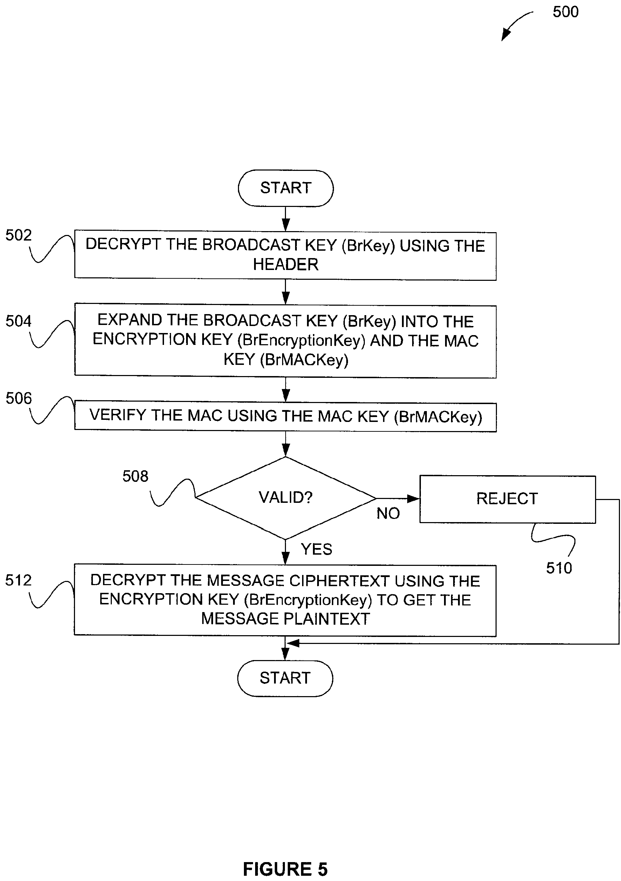

Figure **5** illustrates a method **500** for processing of each recipient-specific message by a recipient device, in accordance with one embodiment. As an option, the method **500** may be implemented in the context of any one or more of the embodiments set forth in any previous and/or subsequent figure(s) and/or description thereof. For example, the method **500** may be implemented in the context of each of the recipient devices **206** of Figure **2** and, in particular, in connection with operation **5** of Figure **2****.** However, it is to be appreciated that the method **500** may be implemented in the context of any desired environment.

As shown, when a recipient (e.g. recipient device **206** of Figure **2**) receives its specific message (e.g. generated/sent in operation **406/408** of Figure **4**), the recipient decrypts the broadcast key (e.g. BrKey, etc.) using the header (e.g. H[RecipientID]) to gain access to the same. See operation **502.** Such algorithm may be the same as that which was used to encrypt the broadcast key (e.g. see method **300** of Figure **3**).

The recipient may then use an expansion function (again, the same as that used earlier) to expand the broadcast key (e.g. BrKey) into two keys, namely the encryption key (e.g. BrEncryptionKey) and the MAC key (e.g. BrMACKey). See operation **504.** Further, in operation **506,** the recipient verifies the MAC using the MAC key (e.g. BrMACKey).

To accomplish this, the MAC key obtained in operation **504** may be used to generate a MAC (again, using the same algorithm as in operation **308** of Figure **3**). Further, the MAC key obtained in operation **504** may be compared to the MAC included in the message received from the routing server. See decision **508.** If there is no match, the message may be rejected in operation **510,** and the method **500** may be terminated, the message may be discarded, and/or an error message may be sent back to the sending device/routing server, etc.

If, however, there is a match per decision **508,** the recipient may be permitted to decrypt the message ciphertext using the encryption key (e.g. BrEncryptionKey) to obtain the message plaintext. See operation **512.** Thus, the recipient may then have access to the message plaintext.

As disclosed in the aforementioned Incorporated Application, one or more embodiments disclosed herein may be employed in connection with an auditing server. In such embodiment, it may be valuable to ensure that the same message is delivered to all recipients, particularly when one of the recipients is the foregoing auditing server that is copied on all message communications, for auditing purposes. In such embodiments, it may be important to ensure that a malicious sender cannot send one message to a receipts device (e.g. peer, etc.), and another message to the auditing server.

When employing one or more embodiments disclosed herein in connection with an auditing sever, a malicious sender may try to create a broadcast key so that a MAC is validated successfully (e.g. by an auditing server, etc.). However decryption would, in such a scenario, fail. Further, the sender may send such broadcast key to one of the recipients (e.g. an auditing server) to try to prevent such recipient from receiving the message. In such a scenario, the sender may give the correct broadcast key to other devices (e.g. peers, etc.). This, however, would result in the malicious sender having to choose both the MAC key and encryption key independently. Further, such an attempt would fail because such two keys are produced from the same broadcast key. In other words, the MAC key is valid if, and only if, the encryption key is valid (subject, in one embodiment, to a statistically insignificant chance of being able to find a different encryption key while maintaining a valid MAC key).

Of course, the various embodiments disclosed herein may be also valuable in other contexts, e.g. administrator-configured user groups. In such context, it may be important to prevent a malicious sender from sending a valid message to some recipients and an invalid message to others without being detected.

For example, in another scenario, a malicious sender may try to send a corrupted header to one of the recipients to prevent such recipient from receiving the message. However, this recipient would be the subject of a failed MAC verification, and the message would be rejected. To this end, a malicious sender cannot send one message to one recipient and another message to another recipient.

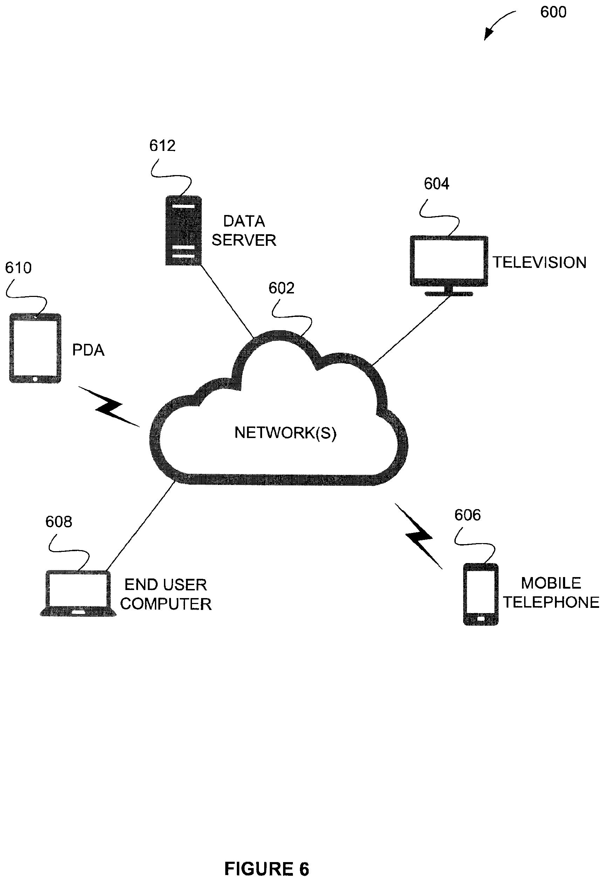

Figure **6** illustrates a network architecture **600,** in accordance with one embodiment. As shown, at least one network **602** is provided. In various embodiments, any one or more components/features set forth during the description of any previous figure(s) may be implemented in connection with any one or more of the components of the at least one network **602.**

In the context of the present network architecture **600,** the network **602** may take any form including, but not limited to a telecommunications network, a local area network (LAN), a wireless network, a wide area network (WAN) such as the Internet, peer-to-peer network, cable network, etc. While only one network is shown, it should be understood that two or more similar or different networks **602** may be provided.

Coupled to the network **602** is a plurality of devices. For example, a server computer **612** and an end user computer **608** may be coupled to the network **602** for communication purposes. Such end user computer **608** may include a desktop computer, lap-top computer, and/or any other type of logic. Still yet, various other devices may be coupled to the network **602** including a personal digital assistant (PDA) device **610,** a mobile phone device **606,** a television **604,** etc.

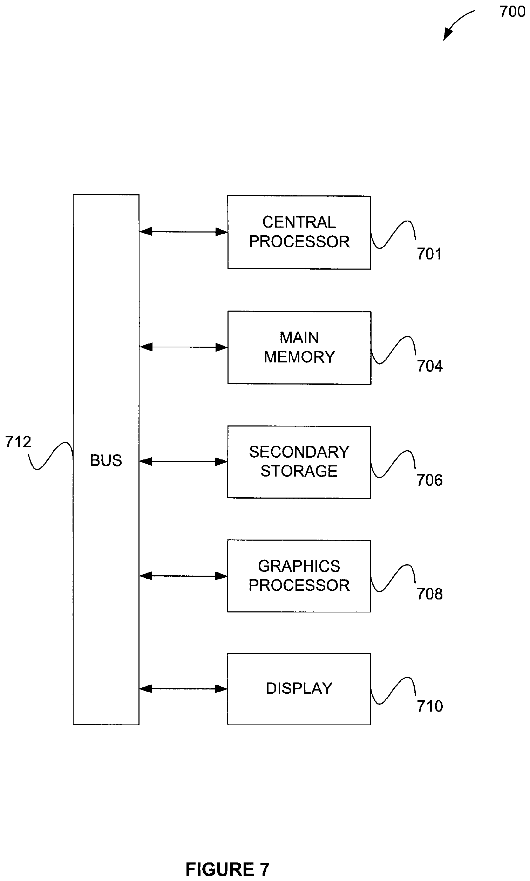

Figure **7** illustrates an exemplary system **700,** in accordance with one embodiment. As an option, the system **700** may be implemented in the context of any of the devices of the network architecture **600** of Figure **6****.** However, it is to be appreciated that the system **700** may be implemented in any desired environment.

As shown, a system **700** is provided including at least one central processor **702** which is connected to a bus **712.** The system **700** also includes main memory **704** [e.g., hard disk drive, solid state drive, random access memory (RAM), etc.]. The system **700** also includes a graphics processor **708** and a display **710.**

The system **700** may also include a secondary storage **706.** The secondary storage **706** includes, for example, a hard disk drive and/or a removable storage drive, representing a floppy disk drive, a magnetic tape drive, a compact disk drive, etc. The removable storage drive reads from and/or writes to a removable storage unit in a well-known manner.

Computer programs, or computer control logic algorithms, may be stored in the main memory **704,** the secondary storage **706,** and/or any other memory, for that matter. Such computer programs, when executed, enable the system **700** to perform various functions (as set forth above, for example). Memory **704,** secondary storage **706** and/or any other storage are possible examples of non-transitory computer-readable media.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media are included which may store data that is accessible by a computer, such as magnetic cassettes, flash memory cards, digital video disks, Bernoulli cartridges, random access memory (RAM), read-only memory (ROM), and the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD™), a BLU-RAY disc; and the like.

It should be understood that the arrangement of components illustrated in the Figures described are exemplary and that other arrangements are possible. It should also be understood that the various system components (and means) defined by the claims, described below, and illustrated in the various block diagrams represent logical components in some systems configured according to the subject matter disclosed herein.

For example, one or more of these system components (and means) may be realized, in whole or in part, by at least some of the components illustrated in the arrangements illustrated in the described Figures. In addition, while at least one of these components are implemented at least partially as an electronic hardware component, and therefore constitutes a machine, the other components may be implemented in software that when included in an execution environment constitutes a machine, hardware, or a combination of software and hardware.

More particularly, at least one component defined by the claims is implemented at least partially as an electronic hardware component, such as an instruction execution machine (e.g., a processor-based or processor-containing machine) and/or as specialized circuits or circuitry (e.g., discreet logic gates interconnected to perform a specialized function). Other components may be implemented in software, hardware, or a combination of software and hardware. Moreover, some or all of these other components may be combined, some may be omitted altogether, and additional components may be added while still achieving the functionality described herein. Thus, the subject matter described herein may be embodied in many different variations, and all such variations are contemplated to be within the scope of what is claimed.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various of the acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both. The description herein of any sequence of actions is not intended to imply that the specific order described for performing that sequence must be followed. All methods described herein may be performed in any suitable order unless otherwise indicated herein or otherwise clearly contradicted by context.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

The embodiments described herein include the one or more modes known to the inventor for carrying out the claimed subject matter. It is to be appreciated that variations of those embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A computer program product for securely broadcasting a message to a plurality of recipient devices, the compute program product comprising computer executable instructions stored on a non-transitory computer readable medium that when executed by a processor instruct the processor to:
identify (102) a message;
encrypt (104) the message utilizing a first key comprising an encryption key;
generate (106) a message authentication code utilizing a second key that is mathematically coupled to the first key that is utilized to encrypt the message, the second key comprising a message authentication code (MAC) key; and
cause (108) the encrypted message to be broadcasted to a plurality of recipient devices, utilizing the message authentication code,
**characterized in that**
the encryption key and the MAC key are generated utilizing a third key via a key derivation function, the third key comprising a broadcast key.

2. The computer program product of claim 1, wherein the computer program product is further configured such that the third key includes a broadcast key.

3. The computer program product of claim 1, wherein the computer program product is further configured such that the third key is included with the encrypted message to be broadcast to the plurality of recipient devices.

4. The computer program product of claim 3, wherein the computer program product is further configured such that the third key is encrypted.

5. The computer program product of claim 4 [], wherein the computer program product is further configured such that the third key is encrypted differently for each of the plurality of recipient devices.

6. The computer program product of claim 5, wherein the computer program product is further configured such that the third key is encrypted differently for each of the plurality of recipient devices, utilizing different session keys.

7. The computer program product of claim 5, wherein the computer program product is further configured such that a plurality of headers is generated for each of the plurality of recipient devices each with the differently encrypted third key.

8. The computer program product of claim 1, wherein the computer program product is further configured such that the message is encrypted utilizing a symmetric encryption algorithm.

9. An apparatus configured to securely broadcasting a message to a plurality of recipient devices, the apparatus comprising:
at least one device configured to:
identify (102) a message;
encrypt (104) the message utilizing a first key comprising an encryption key;
generate (106) a message authentication code utilizing a second key that is mathematically coupled to the first key that is utilized to encrypt the message, the second key comprising a message authentication code (MAC) key; and
cause (108) the encrypted message to be broadcasted to a plurality of recipient devices, utilizing the message authentication code,
**characterized in that** the encryption key and the MAC key are generated utilizing a third key via a key derivation function, the third key comprising a broadcast key.

10. A method (100) for securely broadcasting a message to a plurality of recipient devices, the apparatus, comprising:
identifying (102) a message;
encrypting (104) the message utilizing a first key comprising an encryption key;
generating (106) a message authentication code utilizing a second key that is mathematically coupled to the first key that is utilized to encrypt the message, the second key comprising a message authentication code (MAC) key; and
causing (108) the encrypted message to be broadcasted to a plurality of recipient devices, utilizing the message authentication code,
**characterized in that** the encryption key and the MAC key are generated utilizing a third key via a key derivation function, the third key comprising a broadcast key.

11. A computer program product for processing a recipient-specific message by a recipient device, the comprising program product comprising computer executable instructions stored on a non-transitory computer readable medium that when executed by a processor instruct the processor to:
receiving a message;
generating (504) an encryption key and a message authentication code key,
generating (504) a message authentication code utilizing the message authentication code key;
validating the message authentication code (506); and
decrypting (512) the message utilizing the encryption key, based on the validation,
**characterized in that** the encryption key and the message authentication code key are generated utilizing a third key via a key derivation function, the third key comprising a broadcast key.

## Patentansprüche

1. Computerprogrammprodukt zum sicheren Ausstrahlen einer Nachricht an mehrere Empfängervorrichtungen, wobei das Berechnungsprogrammprodukt computerausführbare Anweisungen aufweist, die auf einem nichttransitorischen computerlesbaren Medium gespeichert sind, die bei Ausführung durch einen Prozessor den Prozessor anweisen:
eine Nachricht zu identifizieren (102);
die Nachricht unter Verwendung eines ersten Schlüssels, der einen Verschlüsselungsschlüssel aufweist, zu verschlüsseln (104);
einen Nachrichtenauthentifizierungscode unter Verwendung eines zweiten Schlüssels zu erzeugen (106), der mathematisch mit dem ersten Schlüssel gekoppelt ist, der verwendet wird, um die Nachricht zu verschlüsseln, wobei der zweite Schlüssel einen Nachrichtenauthentifizierungscodeschlüssel (MAC-Schlüssel) aufweist; und
zu veranlassen (108), dass die verschlüsselte Nachricht unter Verwendung des Nachrichtenauthentifizierungscodes an mehrere Empfängervorrichtungen ausgestrahlt wird,
**dadurch gekennzeichnet, dass**
der Verschlüsselungsschlüssel und der MAC-Schlüssel unter Verwendung eines dritten Schlüssels über eine Schlüsselableitungsfunktion erzeugt wurden, wobei der dritte Schlüssel einen Ausstrahlungsschlüssel aufweist.

2. Computerprogrammprodukt nach Anspruch 1, wobei das Computerprogrammprodukt ferner so konfiguriert ist, dass der dritte Schlüssel einen Ausstrahlungsschlüssel aufweist.

3. Computerprogrammprodukt nach Anspruch 1, wobei das Computerprogrammprodukt ferner so konfiguriert ist, dass der dritte Schlüssel in der verschlüsselten Nachricht umfasst ist, die an die mehreren Empfängervorrichtungen ausgestrahlt werden soll.

4. Computerprogrammprodukt nach Anspruch 3, wobei das Computerprogrammprodukt ferner so konfiguriert ist, dass der dritte Schlüssel verschlüsselt ist.

5. Computerprogrammprodukt nach Anspruch 4, wobei das Computerprogrammprodukt ferner so konfiguriert ist, dass der dritte Schlüssel für jede der mehreren Empfängervorrichtungen unterschiedlich verschlüsselt ist.

6. Computerprogrammprodukt nach Anspruch 5, wobei das Computerprogrammprodukt ferner so konfiguriert ist, dass der dritte Schlüssel für jede der mehreren Empfängervorrichtungen unter Verwendung unterschiedlicher Sessionschlüssel unterschiedlich verschlüsselt ist.

7. Computerprogrammprodukt nach Anspruch 5, wobei das Computerprogrammprodukt ferner so konfiguriert ist, dass mehrere Header für jede der mehreren Empfängervorrichtungen jeweils mit einem anders verschlüsselten dritten Schlüssel erzeugt werden.

8. Computerprogrammprodukt nach Anspruch 1, wobei das Computerprogrammprodukt ferner so konfiguriert ist, dass die Nachricht unter Verwendung eines symmetrischen Verschlüsselungsalgorithmus verschlüsselt wird.

9. Vorrichtung, konfiguriert zum sicheren Ausstrahlen einer Nachricht an mehrere Empfängervorrichtungen, die Vorrichtung aufweisend:
mindestens eine Vorrichtung, die konfiguriert ist:
eine Nachricht zu identifizieren (102);
die Nachricht unter Verwendung eines ersten Schlüssels, der einen Verschlüsselungsschlüssel aufweist, zu verschlüsseln (104);
einen Nachrichtenauthentifizierungscode unter Verwendung eines zweiten Schlüssels zu erzeugen (106), der mathematisch mit dem ersten Schlüssel gekoppelt ist, der verwendet wird, um die Nachricht zu verschlüsseln, wobei der zweite Schlüssel einen Nachrichtenauthentifizierungscodeschlüssel (MAC-Schlüssel) aufweist; und
zu veranlassen (108), dass die verschlüsselte Nachricht unter Verwendung des Nachrichtenauthentifizierungscodes an mehrere Empfängervorrichtungen ausgestrahlt wird,
**dadurch gekennzeichnet, dass**
der Verschlüsselungsschlüssel und der MAC-Schlüssel unter Verwendung eines dritten Schlüssels über eine Schlüsselableitungsfunktion erzeugt wurden, wobei der dritte Schlüssel einen Ausstrahlungsschlüssel aufweist.

10. Verfahren (100) zum sicheren Ausstrahlen einer Nachricht an mehrere Empfängervorrichtungen, die Vorrichtung umfassend:
Identifizieren (102) einer Nachricht;
Verschlüsseln (104) der Nachricht unter Verwendung eines ersten Schlüssels, der einen Verschlüsselungsschlüssel umfasst;
Erzeugen (106) eines Nachrichtenauthentifizierungscodes unter Verwendung eines zweiten Schlüssels, der mathematisch mit dem ersten Schlüssel gekoppelt ist, der verwendet wird, um die Nachricht zu verschlüsseln, wobei der zweite Schlüssel einen Nachrichtenauthentifizierungsschlüssel (MAC-Schlüssel) umfasst; und
Veranlassen (108), dass die verschlüsselte Nachricht unter Verwendung des Nachrichtenauthentifizierungscodes an mehrere Empfängervorrichtungen ausgestrahlt wird,
**dadurch gekennzeichnet, dass**
der Verschlüsselungsschlüssel und der MAC-Schlüssel unter Verwendung eines dritten Schlüssels über eine Schlüsselableitungsfunktion erzeugt wurden, wobei der dritte Schlüssel einen Ausstrahlungsschlüssel umfasst.

11. Computerprogrammprodukt zum Verarbeiten einer empfängerspezifischen Nachricht durch eine Empfängervorrichtung, wobei das umfassende Programmprodukt computerausführbare Anweisungen umfasst, die auf einem nichttransitorischen computerlesbaren Medium gespeichert sind, die bei Ausführung durch einen Prozessor den Prozessor anweisen:
eine Nachricht zu empfangen;
einen Verschlüsselungsschlüssel und einen Nachrichtenauthentifizierungscodeschlüssel zu erzeugen (504);
einen Nachrichtenauthentifizierungscode unter Verwendung des Nachrichtenauthentifizierungscodeschlüssels zu erzeugen (504);
den Nachrichtenauthentifizierungscode (506) zu validieren; und
die Nachricht unter Verwendung des Verschlüsselungsschlüssels auf Grundlage der Validierung zu entschlüsseln (512),
**dadurch gekennzeichnet, dass**
der Verschlüsselungsschlüssel und der Nachrichtenauthentifizierungscodeschlüssel unter Verwendung eines dritten Schlüssels über eine Schlüsselableitungsfunktion erzeugt werden, wobei der dritte Schlüssel einen Ausstrahlungsschlüssel umfasst.

## Revendications

1. Produit de programme informatique pour diffuser de manière sécurisée un message à une pluralité de dispositifs destinataires, le produit de programme informatique comprenant des instructions exécutables par ordinateur stockées sur un support lisible par ordinateur non transitoire qui, lorsqu'elles sont exécutées par un processeur, instruisent au processeur de :
identifier (102) un message ;
chiffrer (104) le message en utilisant une première clé comprenant une clé de chiffrement ;
générer (106) un code d'authentification de message en utilisant une deuxième clé qui est couplée mathématiquement à la première clé qui est utilisée pour chiffrer le message, la deuxième clé comprenant une clé de code d'authentification de message (MAC) ; et
amener (108) le message chiffré à être diffusé à une pluralité de dispositifs destinataires, en utilisant le code d'authentification de message,
**caractérisé en ce que**
la clé de chiffrement et la clé MAC sont générées en utilisant une troisième clé via une fonction de dérivation de clé, la troisième clé comprenant une clé de diffusion.

2. Produit de programme informatique selon la revendication 1, dans lequel le produit de programme informatique est en outre configuré de sorte que la troisième clé inclut une clé de diffusion.

3. Produit de programme informatique selon la revendication 1, dans lequel le produit de programme informatique est en outre configuré de sorte que la troisième clé soit incluse avec le message chiffré à diffuser à la pluralité de dispositifs destinataires.

4. Produit de programme informatique selon la revendication 3, dans lequel le produit de programme informatique est en outre configuré de sorte que la troisième clé soit chiffrée.

5. Produit de programme informatique selon la revendication 4, dans lequel le produit de programme informatique est en outre configuré de sorte que la troisième clé soit chiffrée différemment pour chacun de la pluralité de dispositifs destinataires.

6. Produit de programme informatique selon la revendication 5, dans lequel le produit de programme informatique est en outre configuré de sorte que la troisième clé soit chiffrée différemment pour chacun de la pluralité de dispositifs destinataires, en utilisant différentes clés de session.

7. Produit de programme informatique selon la revendication 5, dans lequel le produit de programme informatique est en outre configuré de sorte qu'une pluralité d'en-têtes soit générée pour chacun de la pluralité de dispositifs destinataires, chacun avec la troisième clé chiffrée différemment.

8. Produit de programme informatique selon la revendication 1, dans lequel le produit de programme informatique est en outre configuré de sorte que le message soit chiffré en utilisant un algorithme de chiffrement symétrique.

9. Appareil configuré pour diffuser de manière sécurisée un message à une pluralité de dispositifs destinataires, l'appareil comprenant :
au moins un dispositif configuré pour :
identifier (102) un message ;
chiffrer (104) le message en utilisant une première clé comprenant une clé de chiffrement ;
générer (106) un code d'authentification de message en utilisant une deuxième clé qui est couplée mathématiquement à la première clé qui est utilisée pour chiffrer le message, la deuxième clé comprenant une clé de code d'authentification de message (MAC) ; et
amener (108) le message chiffré à être diffusé à une pluralité de dispositifs destinataires, en utilisant le code d'authentification de message,
**caractérisé en ce que**
la clé de chiffrement et la clé MAC sont générées en utilisant une troisième clé via une fonction de dérivation de clé, la troisième clé comprenant une clé de diffusion.

10. Procédé (100) pour diffuser de manière sécurisée un message à une pluralité de dispositifs destinataires, l'appareil comprenant :
l'identification (102) d'un message ;
le chiffrement (104) du message en utilisant une première clé comprenant une clé de chiffrement ;
la génération (106) d'un code d'authentification de message en utilisant une deuxième clé qui est couplée mathématiquement à la première clé qui est utilisée pour chiffrer le message, la deuxième clé comprenant une clé de code d'authentification de message (MAC) ; et
le fait d'amener (108) le message chiffré à être diffusé à une pluralité de dispositifs destinataires, en utilisant le code d'authentification de message,
**caractérisé en ce que**
la clé de chiffrement et la clé MAC sont générées en utilisant une troisième clé via une fonction de dérivation de clé, la troisième clé comprenant une clé de diffusion.

11. Produit de programme informatique pour traiter un message spécifique au destinataire par un dispositif destinataire, le produit de programme informatique comprenant des instructions exécutables par ordinateur stockées sur un support lisible par ordinateur non transitoire qui, lorsqu'elles sont exécutées par un processeur, instruisent au processeur de :
recevoir un message ;
générer (504) une clé de chiffrement et une clé de code d'authentification de message ;
générer (504) un code d'authentification de message en utilisant la clé de code d'authentification de message ;
valider le code d'authentification de message (506) ; et
déchiffrer (512) le message en utilisant la clé de chiffrement, sur la base de la validation,
**caractérisé en ce que**
la clé de chiffrement et la clé de code d'authentification de message sont générées en utilisant une troisième clé via une fonction de dérivation de clé, la
troisième clé comprenant une clé de diffusion.
